# EUROPÄISCHE PATENTSCHRIFT

(11) **EP 4 387 835 B1**
(45) Veröffentlichungstag und Bekanntmachung des Hinweises auf die Patenterteilung: **20.08.2025**
(21) Anmeldenummer: 22773426.6
(22) Anmeldetag: 02.09.2022
(51) Int. Cl.: B29C 65/08

(54) **VORRICHTUNG UND VERFAHREN ZUM BEARBEITEN EINES WERKSTÜCKS**
DEVICE AND METHOD FOR PROCESSING A WORKPIECE
DISPOSITIF ET PROCÉDÉ DE TRAITEMENT D'UNE PIÈCE À USINER

(30) Priorität: 15.10.2021 DE 102021126774
(43) Veröffentlichungstag der Anmeldung: 26.06.2024
(73) Patentinhaber: MS Ultraschall Technologie GmbH, 78549 Spaichingen (DE)
(72) Erfinder: KRELL, Volker, 78579 Neuhausen ob Eck (DE)
(74) Vertreter: Qip Patent & Recht Dr. Kuehn & Partner mbB
(86) Internationale Anmeldenummer: PCT/EP2022/074446
(87) Internationale Veröffentlichungsnummer: WO 2023/061661

(56) Entgegenhaltungen:
- DE-A1- 10 331 064
- US-A- 3 863 826

## Beschreibung

Die vorliegende Erfindung betrifft eine Vorrichtung zum Bearbeiten eines Werkstücks mit Ultraschall, beispielsweise zum Bearbeiten einer Materialbahn mit einer Sonotrode. Hierbei stellt sich das Problem, dass das Werkstück, beispielsweise die Materialbahn, Dickenschwankungen unterliegt, oder dass sich aufgrund von Temperaturschwankungen der Vorrichtung Änderungen im Abstand zwischen Werkzeug und Gegenwerkzeug ergeben, so dass der Abstand des Bearbeitungswerkzeugs, beispielsweise der Sonotrode, relativ zu dem Werkstück oder dem Gegenwerkzeug verändert werden muss.

Aus dem Stand der Technik ist es bekannt, das Werkzeug auf einem Schlitten anzuordnen, der das Werkzeug mit Hilfe einer kraftgesteuerten Hubeinrichtung in Richtung des Werkzeugs zustellt und den Abstand zum Werkstück variiert (vgl. DE 197 53 740 C1). Auch ist es aus dem Stand der Technik bekannt, eine Werkzeughalterung für eine Sonotrode über zwei Blattfedern mit einem Grundgestell zu verbinden (vgl. DE 103 31 064 A1).

Es ist die Aufgabe der vorliegenden Erfindung, eine Vorrichtung und ein Verfahren zum Bearbeiten eines Werkstücks zu schaffen, mit denen auf konstruktiv einfache Weise eine Bearbeitung von Werkstücken mit variierender Dicke möglich ist.

Die Lösung dieser Aufgabe erfolgt durch die Merkmale der unabhängigen Ansprüche und insbesondere durch eine Vorrichtung, die ein Grundgestell mit einem auf dem Grundstell linear verschiebbaren Schlitten umfasst, wobei eine relativ zu dem Schlitten bewegbare Werkzeughalterung vorgesehen ist, die mit dem Schlitten über zwei parallele Blattfedern verbunden ist. Für eine Bewegung der Werkzeughalterung relativ zu dem Schlitten ist eine Hubeinrichtung vorgesehen, die zwischen dem Grundgestell und der Werkzeughalterung angeordnet ist.

Erfindungsgemäß ist somit nur eine einzige Hubeinrichtung vorgesehen, die sich unmittelbar an dem Grundgestell abstützt, und die sowohl den Schlitten in eine Arbeitsposition bewegen kann, wie auch die Werkzeughalterung relativ zu dem Schlitten bewegen kann, um den Abstand des Werkzeugs zum Werkstück zu variieren, wenn der Schlitten fixiert bzw. blockiert ist. Hierdurch kann mit Hilfe einer einzigen Hubeinrichtung der Schlitten um einen vergleichsweise großen Anstellhub verfahren werden, während mit derselben Hubeinrichtung ein präziser Arbeitshub der Werkzeughalterung möglich ist. Letzterer kann dadurch erreicht werden, dass relativ steife Blattfedern eingesetzt werden, mit denen zwar nur ein geringer Hub, dieser jedoch mit hoher Genauigkeit und hoher Wiederholbarkeit möglich ist. Da der Schlitten während des Arbeitshubs blockiert bzw. fixiert ist, unterliegt dieser nur einem geringen Verschleiss.

Vorteilhafte Ausführungsformen sind der Beschreibung, der Zeichnung sowie den Unteransprüchen beschrieben.

Nach einer ersten vorteilhaften Ausführungsform kann an dem Grundgestell ein insbesondere verstellbarer Festanschlag für den Schlitten vorgesehen sein, so dass der Schlitten von der Hubeinrichtung in Richtung des Werkstücks angestellt werden kann, bis der Schlitten an dem Festanschlag anschlägt.

Nach einer weiteren vorteilhaften Ausführungsform kann der Hub der Hubeinrichtung einen Anstellhub und einen Arbeitshub umfassen, wobei der Anstellhub den Schlitten bis zu dem Festanschlag bewegt und der Arbeitshub die Werkzeughalterung bei Anschlag des Schlittens an dem Festanschlag relativ zu dem Schlitten bewegt. Auf diese Weise ist mit ein und derselben Hubeinrichtung immer noch eine Bewegung der Werkzeughalterung in Richtung des Werkstücks und von dem Werkstück weg möglich, nachdem der Schlitten sich aufgrund des Anschlagens an dem Festanschlag nicht mehr bewegen kann. Hierdurch ist die Möglichkeit geschaffen, den Anstellhub vergleichsweise groß auszubilden, so dass beispielsweise bei einem Materialwechsel das Werkzeug zurückgezogen und anschließend wieder in eine Arbeitsstellung verbracht werden kann. Der Arbeitshub ermöglicht in einer Arbeitsposition des Werkzeugs eine beispielsweise kraftgeregelte Einstellung des Abstands zwischen dem Werkzeug und einem Gegenwerkzeug.

Nach einer weiteren vorteilhaften Ausführungsform kann an dem Grundgestell ein Festanschlag für die Werkzeughalterung vorgesehen sein. Dieser Festanschlag kann beispielsweise einen oberen und einen unteren Anschlag umfassen, so dass die Hubeinrichtung einerseits in eine obere Referenzstellung und andererseits in eine untere Endstellung bewegt werden kann.

Nach einer weiteren vorteilhaften Ausführungsform kann die Hubeinrichtung einen Kniehebelmechanismus und/oder einen Spindelantrieb aufweisen, um die Werkzeughalterung kontrolliert in Richtung eines Gegenwerkzeugs anzustellen.

Nach einer weiteren vorteilhaften Ausführungsform kann die Hubeinrichtung einen Kraftsensor aufweisen, der die von dem Werkzeug auf ein Werkstück aufgebrachte Kraft detektiert, um dadurch die Hubeinrichtung so anzusteuern, dass das Werkzeug mit einer konstanten Kraft in Richtung des Gegenwerkzeugs angestellt wird.

Nach einer weiteren vorteilhaften Ausführungsform kann für die Blattfedern eine Hubbegrenzung vorgesehen sein, so dass diese nur innerhalb eines begrenzten Bereiches ausgelenkt werden können.

Nach einer weiteren vorteilhaften Ausführungsform können die beiden Blattfedern insbesondere einstellbar gegeneinander vorgespannt sein. Hierdurch kann die Werkzeughalterung relativ zu dem Schlitten in Richtung der Hubeinrichtung vorgespannt werden, wodurch mit Hilfe der Hubeinrichtung auch bei Anschlagen des Schlittens an dem Festanschlag eine Hubbewegung der Werkzeughalterung in Richtung des Werkstücks und von dem Werkstück weg möglich ist.

Nach einer weiteren vorteilhaften Ausführungsform können der Schlitten und die Werkzeughalterung über ein elastisches Element miteinander verbunden sein. Hierdurch lassen sich Schlitten und Werkzeughalterung so miteinander verbinden, dass diese von der Hubeinrichtung gemeinsam verschiebbar sind, wobei jedoch bei Anschlagen des Schlittens an dem Festanschlag dennoch eine Bewegung der Werkzeughalterung relativ zu dem Schlitten möglich ist, wenn die Elastizität des elastischen Elements geeignet gewählt wird.

Nach einer weiteren vorteilhaften Ausführungsform kann der Arbeitshub etwa 5 bis 15%, insbesondere etwa 8 bis 12%, insbesondere etwa 10% des Anstellhubs betragen. Hierdurch lässt sich das Werkzeug beispielsweise für einen Materialwechsel relativ weit von einem Gegenwerkzeug entfernen. Gleichzeitig kann in der Arbeitsposition des Werkzeugs eine feinfühlige Einstellung der Spaltbreite zwischen Werkzeug und Gegenwerkzeug vorgenommen werden.

Beim erfindungsgemäßen Verfahren zum Bearbeiten eines Werkstücks mit einer Vorrichtung der vorstehend beschriebenen Art wird der Schlitten zunächst von der Hubeinrichtung um einen Anstellhub insbesondere bis zu einem Festanschlag bewegt, woraufhin die Hubeinrichtung anschließend die Werkzeughalterung relativ zu dem Schlitten innerhalb eines Arbeitshubs bewegt, insbesondere in Abhängigkeit von einer Kraft, die von der Hubeinrichtung auf das Werkstück aufgebracht wird.

Hierbei kann es vorteilhaft sein, zum Einrichten der Vorrichtung die beiden Blattfedern zwischen den beiden vorgenannten Schritten so zu justieren, dass sich diese auf zwei parallel beabstandeten und ungekrümmten Ebenen befinden. Hierdurch ist eine ideale Arbeitsposition geschaffen, die es im Betrieb ermöglicht, die Werkzeughalterung kraftgesteuert im Rahmen des Arbeitshubs in Richtung des Gegenwerkzeugs und von dem Gegenwerkzeug weg zu bewegen.

Nachfolgend wird die vorliegende Erfindung rein beispielhaft anhand einer vorteilhaften Ausführungsform und unter Bezugnahme auf die beigefügten Zeichnungen beschrieben.

Es zeigen:
- Fig. 1: eine stark schematisierte Darstellung einer Vorrichtung zum Bearbeiten eines Werkstücks in einer Grundstellung;
- Fig. 2: die Vorrichtung von Fig. 1 in einer Arbeitsposition;
- Fig. 3: die Vorrichtung von Fig. 1 und Fig. 2 in einer leicht angehobenen Arbeitsposition; und
- Fig. 4: die Vorrichtung von Fig. 1 in einer leicht abgesenkten Arbeitsposition.

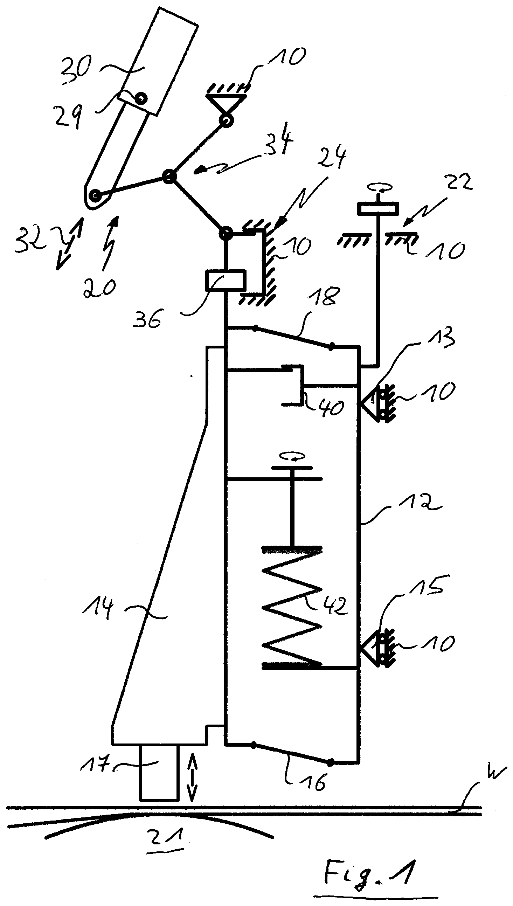

Fig. 1 bis Fig. 4 zeigen eine stark schematisierte Darstellung einer Vorrichtung zum Bearbeiten eines Werkstücks W, beispielsweise einer Materialbahn, mit Ultraschall. Die Vorrichtung umfasst ein nicht näher dargestelltes Grundgestell 10, auf dem ein Schlitten 12 linear verschiebbar ist. Der Schlitten 12 ist über zwei Gleitlager, beispielsweise zwei Rollenumlauflager 13 und 15 an dem Grundgestell 10 so gelagert, dass er (bei dem dargestellten Ausführungsbeispiel) in vertikaler Richtung verschoben werden kann. Es versteht sich, dass die beschriebene Vorrichtung auch in anderen Ausrichtungen angeordnet werden kann, beispielsweise so, dass der Schlitten horizontal oder geneigt angeordnet ist.

Weiterhin ist eine relativ zu dem Schlitten 12 bewegbare Werkzeughalterung 14 vorgesehen, an der ein Werkzeug, beispielsweise eine Sonotrode 17 angeordnet ist. Mit Hilfe der Sonotrode 17 kann das Werkstück W bearbeitet werden, beispielsweise können zwei Materialbahnen miteinander verschweißt werden, indem das Werkzeug bzw. die Sonotrode 17 gegen ein Gegenwerkzeug 21, beispielsweise einem drehbaren Amboss, angestellt und in Betrieb gesetzt wird.

Der Schlitten 12 ist mit der Werkzeughalterung 14 über zwei parallele Blattfedern 16 und 18 verbunden, so dass die Werkzeughalterung 14 relativ zu dem Schlitten 12 parallel bewegt werden kann.

Zur Bewegung sowohl des Schlittens 12 wie auch der Werkzeughalterung 14 ist eine Hubeinrichtung 20 vorgesehen, deren eines Ende an dem Grundgestell 10 und deren anderes Ende an der Werkzeughalterung 14 befestigt ist. Die Hubeinrichtung 20 ist zwischen dem Grundgestell 10 und der Werkzeughalterung 14 angeordnet und bewirkt eine Hubbewegung der Werkzeughalterung 14 relativ zu dem Schlitten 12, wenn der Schlitten 12 fixiert bzw. arretiert ist. Die Hubeinrichtung 20 umfasst einen über ein Gelenk 29 gelenkig gelagerten Antrieb 30, beispielsweise einen Spindelantrieb, der in Richtung des Doppelpfeils 32 bewegbar ist und der bei seiner Bewegung ein Kniehebelgelenk 34, das gegenüber dem Grundgestell 10 abgestützt ist, so bewegt, dass die Werkzeughalterung 14 und der mit dieser über die Blattfedern 16 und 18 verbundene Schlitten 12 in vertikaler Richtung nach oben oder nach unten bewegt werden kann, wenn der Schlitten 12 nicht fixiert ist.

Wie die Figuren weiterhin zeigen, ist an dem Grundgestell 10 eine Arretierung, beispielsweise ein Festanschlag 22 für den Schlitten 12 vorgesehen, der verstellbar ist und der den Schlitten zumindest in einer Bewegungsrichtung fixiert bzw. der eine vertikale Bewegung des Schlittens 12 in Richtung des Gegenwerkzeugs 21 blockiert. Weiterhin umfasst die Vorrichtung an dem Grundgestell 10 eine Arretierung, beispielsweise einen Festanschlag 24 für die Werkzeughalterung 14, wobei der Festanschlag 24 einen oberen Referenzanschlag sowie einen unteren Endanschlag umfassen kann und wobei sich letzterer kurz vor dem Totpunkt des Kniehebelgelenks 34 befinden kann. Auch kann zwischen dem Kniehebelgelenk 34 und der Werkzeughalterung 14 ein Kraftsensor 36 vorgesehen werden, der mit einer (nicht dargestellten) Steuerung verbunden ist, die den Antrieb 30 in Abhängigkeit von der detektierten Kraft so ansteuert, dass das Werkzeug 17 mit einer gewünschten, beispielsweise konstanten Kraft gegen das Gegenwerkzeug 21 angestellt wird.

Die Vorrichtung kann weiterhin eine Hubbegrenzung 40 für die beiden Blattfedern 16 und 18 aufweisen, die dafür sorgt, dass die beiden Blattfedern nur innerhalb eines begrenzten Bereiches ausgelenkt werden können. Eine Vorspannung der beiden Blattfedern 16 und 18 kann durch eine Feder 42 erreicht werden, die zwischen dem Schlitten 12 und der Werkzeughalterung 14 vorgesehen ist. Die Vorspannung kann einstellbar und so gewählt sein, dass die Werkzeughalterung 14 gegen den Schlitten 12 in Richtung der Hubeinrichtung 20, d.h. von dem Werkstück W bzw. dem Gegenwerkzeug 21 weg vorgespannt wird.

Weiterhin kann der Schlitten 12 mit der Werkzeughalterung 14 über ein (nicht dargestelltes) elastisches Element verbunden sein, so dass Schlitten und Werkzeughalterung zwar von der Hubeinrichtung 20 gemeinsam bewegt werden können, dass jedoch eine gewisse Bewegung der Werkzeughalterung 14 relativ zu dem Schlitten 12 noch möglich ist, wenn der Schlitten 12 an dem Festanschlag 22 anschlägt.

Mit der vorstehend beschriebenen Vorrichtung lässt sich das Werkzeug 17 mit Hilfe der Hubeinrichtung 20 zunächst um einen relativ großen Anstellhub und anschließend um einen relativ kleinen Arbeitshub bewegen. Durch Betätigen des Antriebs 30 lässt sich das Kniehebelgelenk 34 so bewegen, dass zunächst die Werkzeughalterung 14 und mit dieser zusammen der Schlitten 12 vertikal relativ zu dem Grundgestell 10 in Richtung des Gegenwerkzeugs 21 bewegt werden. Bei dieser Bewegung wird am Ende des Anstellhubs die Bewegung des Schlittens 12 beispielsweise durch den Festanschlag 22 gestoppt. Die Werkzeughalterung 14 kann jedoch nach wie vor relativ zu dem stillstehenden Schlitten 12 weiterbewegt werden, da die Blattfedern 16 und 18 dies ermöglichen.

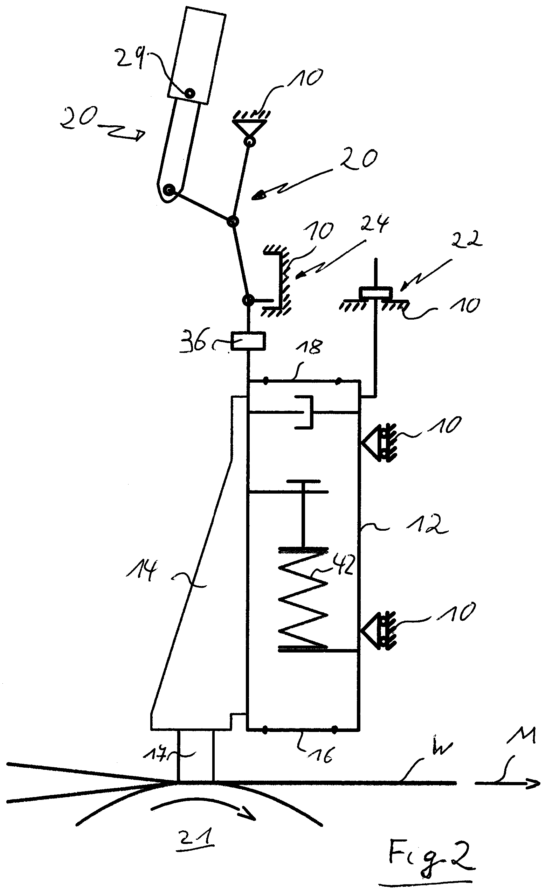

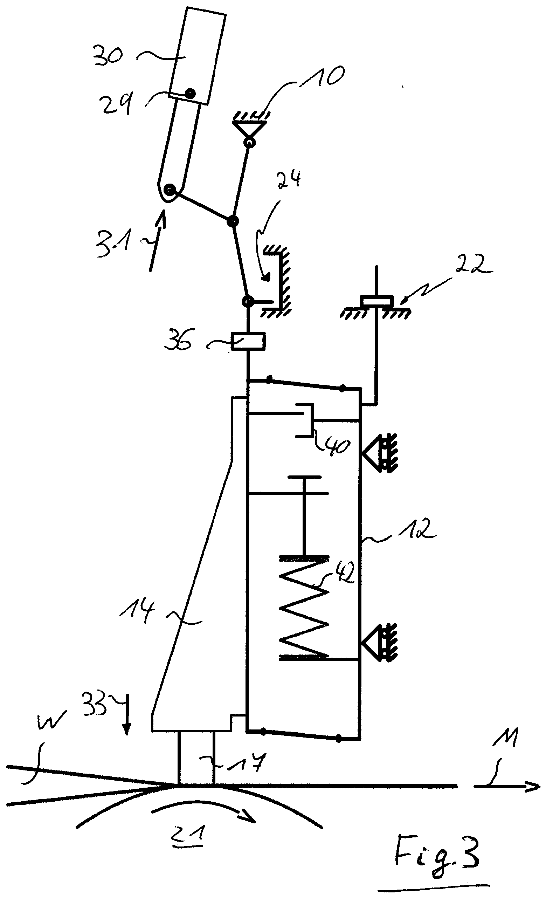

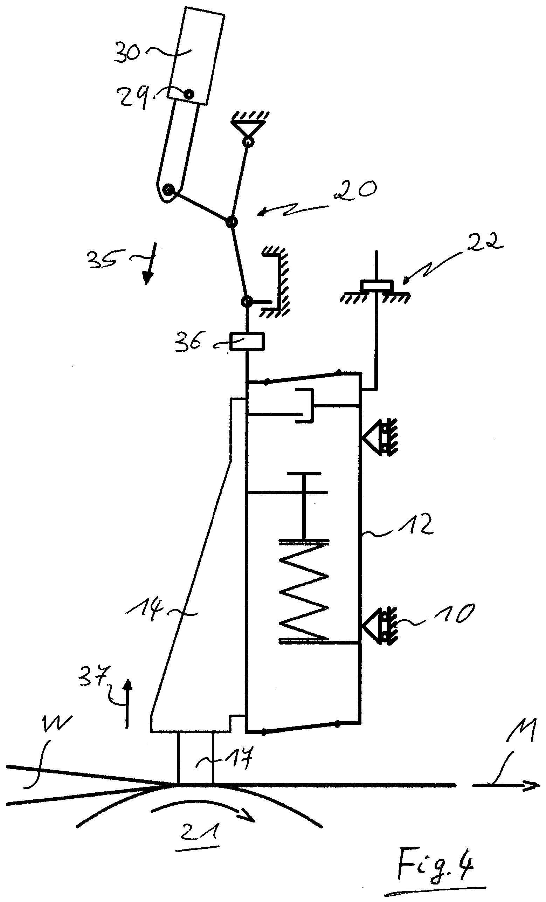

In der in Fig. 2 dargestellten Position befindet sich die Vorrichtung in ihrer Arbeitsstellung, d.h. der ideale Arbeitspunkt ist eingestellt, bei dem die Sonotrode 17 gegenüber dem Gegenwerkzeug 21 einen gewünschten Abstand einnimmt. Beim Bewegen einer Materialbahn in Richtung des Pfeils M (Fig. 2) kann sich durch Toleranzen des Materials oder durch Temperaturschwankungen die Notwendigkeit ergeben, die Spaltbreite zu erhöhen oder zu verringern. Hierzu misst der Kraftsensor 36 die von der Hubeinrichtung 20 auf das Werkzeug 17 aufgebrachte Kraft und regelt in Abhängigkeit von der gemessenen Kraft die Bewegung der Hubeinrichtung 20. Hierbei kann die Werkzeughalterung 14 relativ zu dem stillstehenden Schlitten 12 vertikal nach unten bewegt werden, wenn das Kniehebelgelenk 20 weiter durchgedrückt wird (Fig. 3). Genauso kann die Werkzeughalterung 14 vertikal nach oben bewegt werden, wenn das Kniehebelgelenk 20 geöffnet wird, so wie dies in Fig. 4 dargestellt ist.

Wenn also ausgehend von der idealen Arbeitsposition, die in Fig. 2 dargestellt ist, von dem Kraftsensor 36 eine Abnahme der Kraft im Kraftfluss zwischen dem Werkzeug 17 und dem Grundgestell 10 detektiert wird, so kann der Antrieb 30 in Richtung des Pfeils 31 zurückgefahren werden, so dass sich die Werkzeughalterung 14 in Richtung des Pfeiles 33 vertikal nach unten bewegt. Hierbei bewegt sich jedoch der Schlitten 12 aufgrund der Vorspannung der Feder 42 nicht. Dies würde erst dann erfolgen, wenn die obere Hubbegrenzung 40 erreicht ist.

Fig. 4 verdeutlicht schließlich eine Bewegung des Werkzeugs 17 aus der idealen Arbeitsposition von Fig. 2 weg von dem Gegenwerkzeug 21, wenn der Kraftsensor 36 eine ungewünschte Zunahme der detektierten Kraft ermittelt. In diesem Fall kann der Antrieb 30 in Richtung des Pfeiles 35 verfahren werden, so dass die Werkzeughalterung 14 in Richtung des Pfeiles 37 von dem Gegenwerkzeug 21 etwas entfernt werden kann.

Zum Einrichten der vorstehend beschriebenen Vorrichtung kann diese zunächst in die in Fig. 1 dargestellte Position verfahren werden. In dieser ist der Festanschlag 22 frei und die Feder 42 ist nicht vorgespannt. Schlitten 12 und Werkzeughalterung 14 besitzen noch keine definierte Position zueinander.

In einem anschließenden ersten Schritt kann ein automatisiertes Ausmessen der Kniehebelkinematik erfolgen, wozu ein vollständiger Hub des Antriebs 30 von dem oberen Referenzanschlag bis zu dem unteren Endanschlag des Festanschlags 24 gefahren wird. Hierbei können sowohl der Hub des Antriebs 30 wie auch der Hub des Werkzeugs 17 aufgezeichnet werden, so dass anhand einer Kennlinie (Sonotrodenhub über Spindelhub) eine Arbeitsposition definiert werden kann. In einem nachfolgenden Schritt kann diese Arbeitsposition angefahren werden, um die relative Stellung zwischen der Werkzeughalterung 14 und dem Schlitten 12 einzustellen. Hierzu kann der verstellbare Festanschlag 22 so justiert werden, dass sich die beiden Blattfedern in einer nicht vorgespannten horizontalen Lage befinden, in der diese auf zwei parallel beabstandeten und ungekrümmten Ebenen liegen (vgl. Fig. 2). Anschließend ist es möglich, die Vorspannung der Feder 42 bis zu einem gewünschten Zielwert zu erhöhen.

Durch den vorstehend beschriebenen Einrichtvorgang befindet sich die Mechanik während des Arbeitsvorgangs in einer exakten Arbeitsposition, aus der heraus eine Bewegung der Werkzeughalterung 14 lediglich im Rahmen eines Arbeitshubs erfolgt. Der Arbeitshub kann wesentlich geringer als der Anstellhub sein und beispielsweise lediglich 10% des Anstellhubs betragen. So ist es beispielsweise möglich, das Werkzeug in die Arbeitsstellung um etwa 20 mm (Anstellhub) zu bewegen. Aus der Arbeitsstellung heraus kann das Werkzeug dann im Rahmen des Arbeitshubs beispielsweise um ±2 mm bewegt werden.

## Patentansprüche

1. Vorrichtung zum Bearbeiten eines Werkstücks (W) mit Ultraschall, umfassend
- ein Grundgestell (10),
- einen auf dem Grundgestell (10) linear verschiebbaren Schlitten (12),
- eine relativ zu dem Schlitten (12) bewegbare Werkzeughalterung (14), die mit dem Schlitten (12) über zwei parallele Blattfedern (16, 18) verbunden ist, und
- eine Hubeinrichtung (20), die zwischen dem Grundgestell (10) und der Werkzeughalterung (14) angeordnet ist und die eine Hubbewegung der Werkzeughalterung (14) relativ zu dem Schlitten (12) bewirkt, wobei
- mit der Hubeinrichtung (20) sowohl der Schlitten (12) relativ zu dem Grundgestell (10) bewegbar ist, wie auch bei fixiertem Schlitten (12) die Werkzeughalterung (14) relativ zu dem Schlitten (12) bewegbar ist.

2. Vorrichtung nach Anspruch 1,
**dadurch gekennzeichnet,**
**dass** an dem Grundgestell (10) eine Arretierung (22), insbesondere ein verstellbarer Festanschlag, für den Schlitten (12) vorgesehen ist.

3. Vorrichtung nach Anspruch 2,
**dadurch gekennzeichnet,**
**dass** der Hub der Hubeinrichtung (20) einen Anstellhub und einen Arbeitshub umfasst, wobei der Anstellhub den Schlitten (12) bis zu der Arretierung (22) bewegt und der Arbeitshub die Werkzeughalterung (14) bei arretiertem Schlitten (12) relativ zu dem Schlitten (12) bewegt.

4. Vorrichtung nach Anspruch 1, 2 oder 3,
**dadurch gekennzeichnet,**
**dass** an dem Grundgestell (10) ein Festanschlag (24) für die Werkzeughalterung (14) vorgesehen ist.

5. Vorrichtung nach einem der vorstehenden Ansprüche,
**dadurch gekennzeichnet,**
**dass** die Hubeinrichtung (20) einen Kniehebelmechanismus (34) und/oder einen Spindelantrieb (30) aufweist.

6. Vorrichtung nach einem der vorstehenden Ansprüche,
**dadurch gekennzeichnet,**
**dass** Hubeinrichtung (20) einen Kraftsensor (36) aufweist.

7. Vorrichtung nach einem der vorstehenden Ansprüche,
**dadurch gekennzeichnet,**
**dass** für die Blattfedern (16, 18) eine Hubbegrenzung (40) vorgesehen ist.

8. Vorrichtung nach einem der vorstehenden Ansprüche,
**dadurch gekennzeichnet,**
**dass** die beiden Blattfedern (16, 18) insbesondere einstellbar gegeneinander vorgespannt sind.

9. Vorrichtung nach einem der vorstehenden Ansprüche,
**dadurch gekennzeichnet,**
**dass** der Schlitten (12) und die Werkzeughalterung (14) über ein elastisches Element miteinander verbunden sind.

10. Vorrichtung nach Anspruch 3,
**dadurch gekennzeichnet,**
**dass** der Arbeitshub etwa 5 - 15 %, insbesondere etwa 8 - 12 % des Anstellhubs beträgt.

11. Verfahren zum Bearbeiten eines Werkstücks (W) mit einer Vorrichtung nach einem der vorstehenden Ansprüche,
**dadurch gekennzeichnet, dass**
a) der Schlitten (12) zunächst von der Hubeinrichtung (20) um einen Anstellhub bewegt wird,
b) der Schlitten (12) anschließend arretiert wird, und
c) die Werkzeughalterung (14) bei arretiertem Schlitten (12) von der Hubeinrichtung (20) relativ zu dem Schlitten (12) bewegt wird.

12. Verfahren nach Anspruch 11,
**dadurch gekennzeichnet**,
die Werkzeughalterung (14) von der Hubeinrichtung (20) in Abhängigkeit von einer Kraft bewegt wird, die von der Hubeinrichtung (20) auf das Werkstück (W) aufgebracht wird.

13. Verfahren nach Anspruch 11 oder 12,
**dadurch gekennzeichnet,**
**dass** zum Einrichten der Vorrichtung die beiden Blattfedern (16, 18) zwischen den Schritten a) und b) so justiert werden, dass sich diese auf zwei parallel beabstandeten und ungekrümmten Ebenen befinden.

14. Verfahren nach Anspruch 13,
**dadurch gekennzeichnet,**
**dass** die die Werkzeughalterung (14) nach dem Justieren in einer Richtung gegen den Schlitten (12) vorgespannt wird, die von dem Werkstück (W) weg weist.

## Claims

1. Apparatus for processing a workpiece (W) with ultrasound, comprising
- a base frame (10);
- a slide (12) that is linearly displaceable on the base frame (10);
- a tool holder (14) that is movable relative to the slide (12) and that is connected to the slide (12) via two parallel leaf springs (16, 18); and
- a lifting device (20) that is arranged between the base frame (10) and the tool holder (14) and that causes a lifting movement of the tool holder (14) relative to the slide (12), wherein
- with the lifting device (20), both the slide (12) can be moved relative to the base frame (10) and, when the slide (12) is fixed, the tool holder (14) can be moved relative to the slide (12).

2. Apparatus according to claim 1,
**characterized in that**
a stop (22), in particular an adjustable positive abutment, for the slide (12) is provided at the base frame (10).

3. Apparatus according to claim 2,
**characterized in that**
the stroke of the lifting device (20) comprises a feeding stroke and a working stroke, with the feeding stroke moving the slide (12) up to the stop (22) and the working stroke moving the tool holder (14) relative to the slide (12) when the slide (12) is stopped.

4. Apparatus according to claim 1, 2 or 3,
**characterized in that**
a positive abutment (24) for the tool holder (14) is provided at the base frame (10).

5. Apparatus according to any one of the preceding claims,
**characterized in that**
the lifting device (20) has a toggle lever mechanism (34) and/or a spindle drive (30).

6. Apparatus according to any one of the preceding claims,
**characterized in that**
the lifting device (20) has a force sensor (36).

7. Apparatus according to any one of the preceding claims,
**characterized in that**
a stroke limitation (40) is provided for the leaf springs (16, 18).

8. Apparatus according to any one of the preceding claims,
**characterized in that**
the two leaf springs (16, 18) are in particular preloaded against one another in a settable manner.

9. Apparatus according to any one of the preceding claims,
**characterized in that**
the slide (12) and the tool holder (14) are connected to one another via an elastic element.

10. Apparatus according to claim 3,
**characterized in that**
the working stroke amounts to approximately 5 - 15%, in particular approximately 8 - 12%, of the feeding stroke.

11. Method for processing a workpiece (W) using an apparatus according to any one of the preceding claims,
**characterized in that**
a) the slide (12) is first moved by a feeding stroke by the lifting device (20),
b) the slide (12) is then stopped, and
c) the tool holder (14) is moved relative to the slide (12) by the lifting device (20) when the slide (12) is stopped.

12. Method according to claim 11,
**characterized in that**
the tool holder (14) is moved by the lifting device (20) in dependence on a force that is applied to the workpiece (W) by the lifting device (20).

13. Method according to claim 11 or 12,
**characterized in that**,
for setting up the apparatus, the two leaf springs (16, 18) are adjusted between steps a) and b) so that they are located on two planes that are spaced apart in parallel and that are not curved.

14. Method according to claim 13,
**characterized in that**,
after the adjustment, the tool holder (14) is preloaded against the slide (12) in a direction that faces away from the workpiece (W).

## Revendications

1. Dispositif pour usiner une pièce (W) par ultrasons, comprenant
- un châssis de base (10),
- un chariot (12) déplaçable linéairement sur le châssis de base (10),
- un porte-outil (14) mobile par rapport au chariot (12), qui est relié au chariot (12) par deux ressorts à lame parallèles (16, 18), et
- un moyen de levage (20) qui est disposé entre le châssis de base (10) et le porte-outil (14) et qui assure un mouvement de levage du porte-outil (14) par rapport au chariot (12), dans lequel
- le moyen de levage (20) permet aussi bien de déplacer le chariot (12) par rapport au châssis de base (10) que, lorsque le chariot (12) est fixé, de déplacer le porte-outil (14) par rapport au chariot (12).

2. Dispositif selon la revendication 1,
**caractérisé en ce**
**qu'**un moyen de blocage (22), en particulier une butée fixe réglable, est prévu sur le châssis de base (10) pour le chariot (12).

3. Dispositif selon la revendication 2,
**caractérisé en ce**
**que** la course du moyen de levage (20) comprend une course d'approche et une course de travail, la course d'approche déplaçant le chariot (12) jusqu'au moyen de blocage (22) et la course de travail déplaçant le porte-outil (14) par rapport au chariot (12) lorsque le chariot (12) est bloqué.

4. Dispositif selon les revendications 1, 2 ou 3,
**caractérisé en ce**
**qu'**une butée fixe (24) pour le porte-outil (14) est prévue sur le châssis de base (10).

5. Dispositif selon l'une des revendications précédentes,
**caractérisé en ce**
**que** le moyen de levage (20) présente un mécanisme à genouillère (34) et/ou un entraînement à broche (30).

6. Dispositif selon l'une des revendications précédentes,
**caractérisé en ce**
**que** le moyen de levage (20) présente un capteur de force (36).

7. Dispositif selon l'une des revendications précédentes,
**caractérisé en ce**
**qu'**une limitation de course (40) est prévue pour les ressorts à lame (16, 18).

8. Dispositif selon l'une des revendications précédentes,
**caractérisé en ce**
**que** les deux ressorts à lame (16, 18) sont en particulier précontraints de manière réglable l'un par rapport à l'autre.

9. Dispositif selon l'une des revendications précédentes,
**caractérisé en ce**
**que** le chariot (12) et le porte-outil (14) sont reliés entre eux par un élément élastique.

10. Dispositif selon la revendication 3,
**caractérisé en ce**
**que** la course de travail représente environ 5 à 15 %, en particulier environ 8 à 12 % de la course d'approche.

11. Procédé d'usinage d'une pièce (W) à l'aide d'un dispositif selon l'une des revendications précédentes,
**caractérisé en ce que**
a) le chariot (12) est d'abord déplacé par le moyen de levage (20) d'une course d'approche,
b) le chariot (12) est ensuite bloqué, et
c) le porte-outil (14) est déplacé par le moyen de levage (20) par rapport au chariot (12) lorsque le chariot (12) est bloqué.

12. Procédé selon la revendication 11,
**caractérisé en ce**
**que** le porte-outil (14) est déplacé par le moyen de levage (20) en fonction d'une force exercée par le moyen de levage (20) sur la pièce (W).

13. Procédé selon la revendication 11 ou 12,
**caractérisé en ce**
**que** pour régler le dispositif, les deux ressorts à lame (16, 18) sont ajustés entre les étapes a) et b) de telle sorte qu'ils se trouvent sur deux plans parallèles espacés et non courbés.

14. Procédé selon la revendication 13,
**caractérisé en ce**
**que** le porte-outil (14), après ajustement, est précontraint contre le chariot (12) dans une direction opposée à la pièce (W).
